# FASCICULE DE BREVET EUROPEEN

(11) **EP 4 334 180 B1**
(45) Date de publication et mention de la délivrance du brevet: **19.08.2026**
(21) Numéro de dépôt: 22726467.8
(22) Date de dépôt: 29.04.2022
(51) Int. Cl.: B60W 30/095, B60W 30/18, B60W 60/00, G01C 21/34

(54) **PROCÉDÉ DE COMMANDE D'UN VÉHICULE AUTONOME**
VERFAHREN ZUR STEUERUNG EINES AUTONOMEN FAHRZEUGS
METHOD FOR CONTROLLING AN AUTONOMOUS VEHICLE

(30) Priorité: 03.05.2021 FR 2104645
(43) Date de publication de la demande: 13.03.2024
(73) Titulaire: Ampere SAS, 92100 Boulogne-Billancourt (FR)
(72) Inventeur: MOLINA RAMOS, Nievsabel, 92130 Issy-les-Moulineaux (FR); MILANES, Vicente, Calle Cardenal Cisneros 85, 5izq 28010 Madrid (ES); GONZALEZ BAUTISTA, David, 78210 Saint Cyr L'Ecole (FR); CORTES LAFUENTE, Irene, 50300 Calatayud, Zaragoza (ES); ASTUDILLO OLALLA, Armando, 28041 Madrid (ES)
(74) Mandataire: Renault Group
(86) Numéro de dépôt international: PCT/EP2022/061576
(87) Numéro de publication internationale: WO 2022/233739

(56) Documents cités:
- DE-A1- 102018 113 007
- DAVID GONZA?LEZ BAUTISTA: "Functional architecture for automated vehicles trajectory planning in complex environments", 3 April 2017 (2017-04-03), XP055478016, Retrieved from the Internet <URL:https://pastel.archives-ouvertes.fr/tel-01568505/file/2017PSLEM002_archivage.pdf>
- LATTARULO RAY ET AL: "Real-Time Trajectory Planning Method Based On N-Order Curve Optimization", 2020 24TH INTERNATIONAL CONFERENCE ON SYSTEM THEORY, CONTROL AND COMPUTING (ICSTCC), IEEE, 8 October 2020 (2020-10-08), pages 751 - 756, XP033863051, DOI: 10.1109/ICSTCC50638.2020.9259787

## Description

L'invention concerne un procédé de commande d'un véhicule autonome. L'invention porte encore sur un dispositif de commande d'un véhicule autonome. L'invention porte également sur un programme d'ordinateur mettant en œuvre le procédé mentionné. L'invention porte enfin sur un support d'enregistrement sur lequel est enregistré un tel programme.

Les technologies de véhicules autonomes utilisent essentiellement des cartographies haute définition, en association avec des profils de vitesse qui satisfont les paramètres de contrainte latérale et longitudinale du véhicule autonome, pour prédéfinir des trajectoires correspondant à différents scénarios de conduite autonome dans une zone de circulation donnée.

Par exemple, lorsqu'un véhicule autonome aborde un carrefour en X, les trajectoires potentielles pour aborder le carrefour (tourner à droite, tourner à gauche, aller tout droit) sont déjà pré-cartographiées ainsi que les profils de vitesse associés.

Toutefois, ces technologies présentent l'inconvénient d'être intrinsèquement limitées aux scénarios de circulation prédéfinis à partir des cartographies.

C'est le cas également de la demande de brevet DE102018113007A1, dans laquelle la trajectoire d'un véhicule autonome est ajustée en fonction de l'environnement. Il en est de même dans le document de David Gonzalez Bautista « Functional architecture for automated vehicles trajectory planning in complex environments », du 3 avril 2017, qui décrit un algorithme d'évitement d'obstacles, et l'article de Lattarulo Ray et al. « Real-Time trajectory planning method based on n-order curve optimization », 8 octobre 2020, 24^{th} international conference on system theory, control and computing, IEE, qui traite de l'optimisation du profil cinématique d'un véhicule autonome.

On connaît du document US9511767B1 un procédé de commande d'un véhicule autonome utilisant des données issues d'un système de perception pour adapter la trajectoire du véhicule autonome en fonction du comportement des véhicules environnants. Toutefois, cette solution présente des inconvénients.

Le but de l'invention est de fournir un dispositif et un procédé de commande d'un véhicule autonome remédiant aux inconvénients ci-dessus et améliorant les dispositifs et procédés de commande d'un véhicule autonome connus de l'art antérieur. En particulier, l'invention a pour objectif de fournir un dispositif et un procédé qui soient simples et fiables et qui améliorent la conduite autonome.

A cet effet l'invention porte sur un procédé de commande d'un véhicule autonome selon la revendication indépendante 1.

La détermination d'une carte locale peut permettre la détermination, notamment par des courbes de Bézier, d'une nouvelle courbe du segment donné entre un point d'entrée et un point de sortie du segment donné et la nouvelle courbe peut présenter une continuité G2 avec la première trajectoire au point d'entrée et au point de sortie.

L'étape d'optimisation de la première carte peut comprendre en outre l'optimisation du premier profil cinématique, l'optimisation du premier profil cinématique comprenant une détermination d'un deuxième profil cinématique associé au segment donné, au moins un paramètre du deuxième profil cinématique étant différent d'un paramètre du premier profil cinématique, l'étape de commande du déplacement du véhicule autonome sur le segment donné prenant en outre en compte le deuxième profil cinématique.

La détermination d'un deuxième profil cinématique associé au segment donné peut comprendre un calcul d'un seuil maximal de vitesse sans collision à partir des données issues de l'au moins un moyen de perception, et le deuxième profil cinématique peut comprendre des vitesses maximales inférieures au seuil maximal de vitesse sans collision.

Le seuil maximal de vitesse sans collision peut être calculé en résolvant une équation selon laquelle le seuil maximal de vitesse sans collision est égal à la racine carrée du produit de la valeur de freinage nécessaire pour atteindre le seuil maximal de vitesse sans collision par le double la distance de détection maximale de l'au moins un moyen de perception.

L'étape de détection d'une situation à optimiser peut comprendre une mesure d'une durée de maintien, pendant laquelle le véhicule autonome reste dans une situation à optimiser et une comparaison de la durée de maintien à un seuil de déclenchement associé à ladite situation, et l'étape d'optimisation peut s'exécuter lorsque la durée de maintien est supérieure au seuil de déclenchement.

Un ensemble de situations prédéfinies peut être mémorisé dans une mémoire électronique, et l'étape de détection d'une situation à optimiser peut comprendre une comparaison d'une perception issue de l'au moins un moyen de perception avec l'ensemble de situations prédéfinies.

L'ensemble de situations prédéfinies peut comprendre une traversée d'un rond-point dont les deux voies sont vides, et/ou une entrée sur un rond-point dans des conditions de trafic dense, et/ou une réunion de deux voies de circulation en une seule voie, et/ou un passage d'un carrefour embouteillé, et/ou un dépassement d'un véhicule très lent sur une route à double sens comprenant une seule voie dans chaque sens.

Le deuxième profil cinématique peut comprendre une vitesse maximale plus élevée d'au moins 20%, et/ou une accélération maximale plus élevée d'au moins 200% et/ou un jerk plus élevé d'au moins 1000% que le premier profil cinématique.

L'invention porte également sur un dispositif de commande d'un véhicule autonome selon la revendication indépendante 10.

L'invention porte en outre sur un véhicule autonome selon la revendication 11.

L'invention porte également sur un produit programme d'ordinateur selon la revendication indépendante 12.

L'invention porte encore sur un support d'enregistrement de données selon la revendication indépendante 13.

Le dessin annexé représente, à titre d'exemple, un mode de réalisation d'un dispositif de commande selon l'invention et un mode d'exécution d'un procédé de commande selon l'invention.
[Fig. 1] La figure 1 représente un mode de réalisation d'un véhicule autonome équipé d'un dispositif de commande.
[Fig. 2] La figure 2 illustre un mode de détermination d'un profil cinématique du véhicule autonome selon le mode de réalisation de l'invention.
[Fig. 3] La figure 3 représente un ordinogramme d'un mode d'exécution d'un procédé de commande selon un mode de réalisation de l'invention.
[Fig. 4]. La figure 4 illustre un premier exemple de mise en œuvre du procédé de commande selon le mode de réalisation de l'invention.
[Fig. 5]. La figure 5 illustre un deuxième exemple de mise en œuvre du procédé de commande selon le mode de réalisation de l'invention.

Le véhicule autonome 100 selon le mode de réalisation de l'invention peut être un véhicule autonome de n'importe quel type, notamment un véhicule de tourisme, un véhicule utilitaire, un camion ou encore un véhicule de transport en commun tel qu'un bus ou une navette.

Le véhicule autonome 100 comprend un système de commande 10 et des actionneurs de mouvement 4.

Les actionneurs de mouvement 4 font partie du châssis du véhicule autonome 100. Ils comprennent notamment un actionneur de couple moteur, un actionneur de freins et un actionneur de rotation des roues directrices. Les actionneurs de mouvement 4 reçoivent des commandes du système de commande 10 afin de mettre en œuvre un déplacement du véhicule autonome selon une trajectoire déterminée par le système de commande 10.

Le système de commande 10 comprend principalement les éléments suivants :
- un système de perception 2, comprenant des moyens de perception 21 et un module 22 de traitement de l'horizon électronique,
- une mémoire électronique 3,
- et une unité de calcul 5 comprenant un microprocesseur 1, une mémoire électronique locale 6 et des interfaces de communication 7 permettant au microprocesseur 1 de communiquer avec le système de perception 2, et les actionneurs de mouvement 4.

Les moyens de perception 21 peuvent comprendre tout ou partie des équipements suivants : un ensemble de caméras et/ou lidars et/ou radars. Alternativement ou en complément, les moyens de perception 21 pourraient comprendre des systèmes de communication entre véhicules (systèmes V2V) ou des systèmes de communication de véhicule à tout (systèmes V2X) permettant aux véhicules d'échanger des informations entre eux, avec les infrastructures et les piétons.

Avantageusement, les moyens de perception 21 permettent de percevoir l'environnement situé à 360° autour du véhicule autonome 100.

Dans un mode de réalisation préférentiel, les moyens de perception 21 comprennent cinq caméras et un lidar. Les images issues des caméras sont capturées périodiquement et de manière synchrone et sont agrégées avec les données issues d'une révolution du lidar.

A partir des données issues des moyens de perception 21, le module 22 de traitement de l'horizon électronique construit une perception structurée de la scène de conduite.

Périodiquement, notamment à chaque réception de données, le module 22 détermine les capacités maximales du système de perception 2, c'est-à-dire une distance DLIM de détection maximale des moyens de perception 21, qui varie selon le scenario de conduite. Par exemple, lorsque le véhicule autonome 100 circule sur une autoroute la distance DLIM est plus grande que lorsqu'il circule sur un carrefour giratoire, communément nommé « rond-point ».

La distance DLIM dépend en outre d'autres paramètres, tels que les conditions météorologiques, la luminosité, la présence d'éléments d'infrastructure routière (par exemple un tunnel), ou le trafic environnant (par exemple un camion).

Dans la suite du document, le terme « rond-point » désigne un carrefour giratoire tel que les véhicules circulant sur le carrefour sont prioritaires par rapport aux véhicules entrant sur le carrefour. De plus, la distance de détection maximale des moyens de perception est nommée « distance limite de perception DLIM ».

La distance limite de perception DLIM peut être déterminée à partir de la limite de perception de chaque moyen de perception. Dans un mode de réalisation, la distance limite de perception DLIM est le minimum entre la limite de perception concernant les images issues des caméras et la limite de perception des données issues du lidar.

La limite de perception des images issues des caméras peut être définie comme la distance maximale en dessous de laquelle la hauteur tout objet d'intérêt (véhicule, piéton) est supérieur à un seuil minimum, par exemple de 25 pixels. L'ordre de grandeur de cette première limite est de plusieurs dizaines de mètres, par exemple une quarantaine de mètres dans des conditions normales de visibilité, notamment sur le plan météorologique.

La limite de perception des données issues du lidar peut être définie comme la distance maximale en dessous de laquelle le nombre de points de laser atteignant un objet d'intérêt (véhicule, piéton) est supérieur à un seuil minimum.

Dans une zone de perception, délimitée par un cercle centré sur le véhicule autonome et de rayon égal à la distance limite de perception DLIM, le module 22 de traitement de l'horizon électronique construit une grille d'occupation de la scène de conduite. Les nuages de points issus du lidar sont en quelque sorte discrétisés en cellules. Chaque cellule de la grille est déterminée comme étant libre, occupée, ou non déterminée. Cette détermination repose notamment sur le traitement de la hauteur des points de la cellule, tel que l'application de seuils minimum et maximum de hauteur de points dans la cellule.

La grille d'occupation délimite une zone sans risque de collision autour de la position du véhicule autonome 100, ainsi qu'une représentation tridimensionnelle des obstacles situés dans la zone de perception.

Les données issues du module 22 de traitement de l'horizon électronique fournissent une perception structurée du scénario de conduite sur la zone de perception, notamment une perception du trafic environnant le véhicule autonome 100, en termes de densité de trafic et de position des sujets d'intérêt (véhicules, piétons).

Le système de commande 10 comprend en outre une mémoire électronique 3 dans laquelle est enregistré un ensemble de données numériques représentant l'infrastructure réelle de l'environnement du véhicule autonome 100. Ces données numériques concernent, de manière générale, tous les éléments pouvant inférer un choix dans la conduite du véhicule autonome 100. Elles concernent notamment le tracé et les limites des portions de chaussées navigables, le nombre de voies des portions de chaussées, les limitations de vitesse applicables sur les portions de chaussées, le type de marquage au sol et leur localisation, la présence et position de panneaux de signalisation, de feux tricolores et de ronds-points.

Ces données numériques seront simplement appelées « carte M1 » par la suite.

Dans le mode de réalisation de l'invention, le calculateur 1 permet d'exécuter un logiciel comprenant les modules suivants :
- un module 11 de détermination d'une trajectoire, qui collabore avec le système de perception 2 et la carte 3,
- un module 12 de détection d'une situation à optimiser, qui collabore avec le système de perception 2,
- un module 13 d'optimisation, qui collabore avec le système de perception 2,
- un module 14 de commande du déplacement du véhicule autonome, qui collabore avec les actionneurs de mouvement 4.

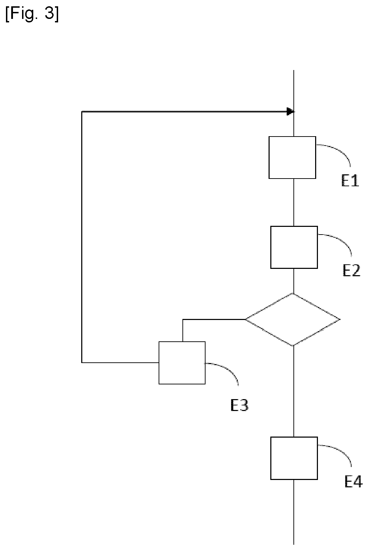

Un mode d'exécution du procédé de commande d'un véhicule autonome est décrit ci-après en référence à la figure 3. Le procédé comprend quatre étapes E1 à E4.

Dans la première étape E1 on détermine une trajectoire planifiée T1 entre un point de départ et un point d'arrivée du véhicule autonome 100. Pour cela, on utilise notamment la carte M1 enregistrée dans la mémoire électronique 3 et les données issues du système de perception 2.

Dans la suite du document, le terme de « trajectoire » est utilisé pour désigner l'évolution temporelle d'un vecteur d'état définissant les caractéristiques du déplacement du véhicule autonome 100. Dans un mode de réalisation préférentiel, le vecteur d'état comprend une position, notamment des coordonnées x, y, des vitesses longitudinales et latérales et/ou des accélérations longitudinales et latérales et/ou une vitesse de lacet et/ou un jerk. Dans la suite du document, le terme « position » est utilisé pour désigner soit les coordonnées x, y du vecteur d'état, soit le vecteur d'état dans son ensemble.

La trajectoire planifiée T1 est préférentiellement découpée en segments de trajectoire, également nommés « segments » dans la suite du document.

Avantageusement, les segments sont chacun définis de sorte à pouvoir se situer entièrement dans la zone de perception du véhicule autonome 100 lorsque celui-ci s'engage sur le segment. Notamment, la longueur d'un segment est inférieure à la distance limite de perception DLIM.

Le terme « profil cinématique » est utilisé dans la suite du document pour désigner un profil générique de vitesse, d'accélération et de jerk mis en œuvre par le véhicule. Le profil cinématique sert en quelque sorte de gabarit pour calculer les vitesses, accélérations et jerks mis en œuvre dans le calcul de trajectoire. Le gabarit défini par le profil cinématique pose des limites en termes de vitesse, d'accélération et de jerk.

Le profil cinématique prend en compte les contraintes imposées par l'infrastructure routière : tracé de la route, nombre de voies, largeur de chacune des voies, présence d'intersection et/ou de feu tricolore, limitations de vitesse, etc... Il est également déterminé en fonction des caractéristiques techniques du véhicule autonome. Il est en outre défini à partir de critères de confort de conduite, portant en particulier sur un seuil maximal de vitesse et/ou d'accélération latérale et/ou de jerk.

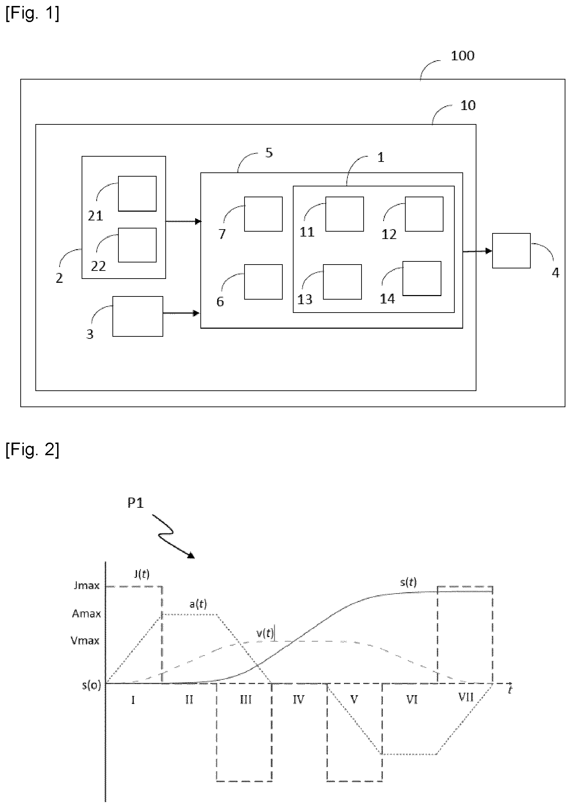

Dans un mode de réalisation, le profil cinématique peut être défini selon une méthode de limitation du jerk (le jerk étant la dérivée de l'accélération) illustrée par la figure 2.

La figure 2 est un graphe comprenant trois courbes, J(t), a(t) et v(t), représentant respectivement l'évolution temporelle du jerk, de l'accélération et de la vitesse du véhicule autonome 100.

La courbe J(t) est une courbe en escaliers : le temps est découpé en intervalles de durée fixe, et la valeur du jerk étant constante sur chaque intervalle. La durée des intervalles dépend de la limite d'accélération du véhicule et de la distance disponible pour accélérer ou freiner.

Dans l'exemple illustré, le jerk peut prendre trois valeurs discrètes : la valeur nulle, une valeur maximale Jmax et une valeur minimale -Jmax.

La valeur de Jmax est faible de sorte à favoriser le confort des usagers du véhicule autonome 100. Dans un mode de réalisation, la valeur Jmax est fixée à 1m/s⁻³.

La courbe J(t) détermine ainsi l'évolution temporelle de l'accélération a(t) :
- la courbe a(t) est constituée de segments linéaires dont la pente est déterminée par la valeur de Jmax et la durée des intervalles temporels,
- elle évolue entre les valeurs d'accélération Amax et -Amax.

La courbe a(t) détermine l'évolution temporelle de la vitesse v(t) entre une vitesse nulle et une vitesse maximale Vmax, Vmax pouvant être déterminée par la limitation de vitesse relative au segment de trajectoire.

Cette méthode est répétée sur chaque segment de trajectoire afin de définir une trajectoire T1 conforme à l'infrastructure routière, qui soit la plus confortable possible sans ralentir le trafic. Ainsi, pour chaque segment de trajectoire, les vitesses, accélérations et jerks appliqués sont déterminés en fonction d'un profil cinématique et de la carte M1.

Dans la suite du document, on considère que la trajectoire T1 est décomposée en N segments S₁, ..., S_{N}, un premier profil cinématique P1ᵢ étant associé à chaque segment Sᵢ, chacun des premiers profils cinématiques P1ᵢ étant défini en fonction de la première carte M1 et chacun des segments Sᵢ étant défini en fonction de la première carte M1 et du premier profil qui lui est associé P1ᵢ.

Le terme « segment de trajectoire » désigne donc à la fois la courbe de la trajectoire mais aussi les valeurs de vitesse, d'accélération et de jerk appliquées pour déplacer le véhicule selon la courbe du segment.

Ainsi, étant donnés deux points distincts C et D, deux segments reliant le point C au point D sont considérés comme différents si leurs courbes respectives sont différentes, ou si les valeurs de vitesse ou d'accélération ou de jerk respectivement appliquées pour déplacer le véhicule sur la courbe de l'un et l'autre des segments sont différentes. La trajectoire T1 ainsi décomposée en segments de trajectoire est stockée dans la mémoire locale 6 de l'unité de calcul 5.

On enchaine ensuite sur l'étape E2. Dans l'étape E2 on cherche à détecter une situation à optimiser sur un segment Sᵢ de la trajectoire T1 situé à l'avant du véhicule autonome 100, le segment Sᵢ se situant entièrement dans la limite de perception DLIM des moyens de perception 21.

Autrement dit, l'étape E2 détermine un segment Sᵢ de la trajectoire T1 sur lequel est localisée une situation à optimiser. Le segment Sᵢ se situe à l'avant du véhicule ce qui signifie que le segment Sᵢ constitue une partie de la trajectoire T1 que le véhicule autonome n'a pas encore parcourue. Dans le mode de réalisation présenté, on fait l'hypothèse que la situation à optimiser est circonscrite à un segment isolé. Dans des modes de réalisation alternatifs, on pourrait considérer qu'une situation à optimiser peut s'étendre sur plusieurs segments de trajectoire consécutifs. Les segments doivent cependant tous se trouver dans la limite de perception DLIM.

Une situation à optimiser est un scénario de circulation dans lequel le déplacement du véhicule autonome est pénalisé par la première trajectoire T1, notamment par les limitations du premier profil cinématique P1 associé à la trajectoire T1, V1max et/ou A1max et/ou J1max. Par exemple, dans une situation de trafic dense, le véhicule autonome 100 peut rester bloqué très longtemps en entrée d'un rond-point si le profil cinématique associé à sa trajectoire ne lui permet pas d'accélérer suffisamment pour s'insérer dans le trafic.

Autrement dit, le profil cinématique P1 mis en œuvre par la trajectoire T1 a été défini selon des critères de confort de conduite qui limitent la réactivité du véhicule autonome. Le profil P1 permet au véhicule autonome de gérer la très grande majorité des situations dans des conditions de sécurité et de confort optimales. Mais le profil P1 peut s'avérer inadapté à certaines situations. Cette inadaptation peut avoir pour conséquence de ralentir fortement le véhicule -par exemple lorsque le véhicule ne peut pas doubler un camion qui le précède- ou même de le maintenir longuement à l'arrêt, par exemple lorsque le véhicule n'arrive pas à s'insérer dans un rond-point du fait de la densité de trafic.

D'autres situations à optimiser peuvent concerner non pas le premier profil cinématique P1 mais la première carte M1 représentant l'infrastructure réelle de l'environnement de circulation du véhicule autonome 100. Dans certains cas, la première carte M1 induit une trajectoire particulière d'un véhicule qui ne correspond pas au comportement habituel d'un conducteur humain et qui n'optimise pas la conduite. C'est le cas par exemple sur un segment de trajectoire traversant un rond-point à deux voies sur lequel aucun autre véhicule ne circule. La première trajectoire T1 détermine un déplacement sur la voie extérieure du rond-point, qui nécessite une diminution importante de la vitesse du véhicule autonome avant son entrée sur le rond-point. La trajectoire T1 a été ainsi définie en référence à la carte M1 représentant un rond-point comportant deux voies. Or lorsqu'un conducteur humain aborde un rond-point à plusieurs voies sur lequel aucun autre véhicule ne circule, il adapte la trajectoire de son véhicule à cette situation : il anticipe le fait qu'il va diminuer la courbure de sa trajectoire en utilisant les deux voies, et donc il aborde le rond-point avec une vitesse sensiblement supérieure à la vitesse qu'il aurait s'il circulait uniquement sur la voie extérieure du rond-point. L'adaptation mise en œuvre par le conducteur humain revient à modifier de façon virtuelle l'infrastructure routière, notamment en considérant que le rond-point ne comporte qu'une voie.

Dans un mode d'exécution du procédé, on compare les données reçues du système de perception 2, notamment les données issues du module 22 de traitement de l'horizon électronique, à un ensemble de situations prédéfinies mémorisées dans la mémoire électronique locale 6.

Dans la suite du document,
- les données issues du module 22 de traitement de l'horizon électronique sont nommées « données de perception »,
- l'ensemble de situations prédéfinies mémorisées dans la mémoire électronique locale 6 est nommé « tableau de situations »,
- les données contenues dans le tableau de situations et relatives à une situation prédéfinie sont nommées « paramètres de situation ».

Les situations prédéfinies correspondent à des situations à optimiser. Elle peuvent comprendre :
- une entrée sur un rond-point dont les deux voies sont vides, nommée dans la suite du document « situation du rond-point vide » et/ou
- un arrêt prolongé en entrée d'un rond-point dans des conditions de trafic dense, nommé dans la suite du document « situation du rond-point encombré » et/ou
- une réunion de deux voies de circulation en une seule voie dans des conditions de trafic embouteillé, et/ou
- un arrêt prolongé à un carrefour embouteillé, et/ou
- un maintien prolongé derrière un véhicule très lent sur une route à double sens comprenant une seule voie dans chaque sens.

A chacune des situations prédéfinies, on peut associer un ou plusieurs paramètres de situation, parmi lesquels des éléments d'infrastructure routière et/ou une densité de trafic et/ou un seuil de déclenchement.

Ainsi, la comparaison des données de perception avec l'ensemble de situations prédéfinies peut comprendre une comparaison des éléments d'infrastructure routière empruntés par la trajectoire T1 avec les éléments d'infrastructure routière associés à chacune des situations prédéfinies. Les éléments d'infrastructure routière peuvent comprendre par exemple, un rond-point à plusieurs voies, ou un carrefour en X ou une jonction entre deux voies, ou une route à double-sens présentant une voie dans chaque sens.

De plus, la comparaison entre les données de perception et les situations prédéfinies peut également comprendre une comparaison d'une densité de trafic issue des données de perception à un seuil de densité associé à chacune des situations prédéfinies. Le seuil de densité associé à une situation prédéfinie peut être un seuil de densité minimal, par exemple pour la situation du rond-point encombré. Le seuil de densité peut également être un seuil maximal, par exemple pour la situation du rond-point vide.

Par ailleurs, les paramètres de situation peuvent comprendre un seuil dit de déclenchement correspondant à une durée minimale de maintien dans ladite situation. La durée minimale de maintien varie selon la situation prédéfinie. Elle peut par exemple être nulle pour la situation du rond-point vide. Elle peut être de l'ordre d'une ou plusieurs minutes pour la situation du rond-point encombré.

D'autres paramètres de situation non décrits dans ce document peuvent être envisagés.

Une situation à optimiser est détectée lorsque tous les paramètres de situation associés à cette situation sont vérifiés, notamment par comparaison avec les données de perception.

Si aucune situation à optimiser n'est détectée, on enchaine sur l'étape E4 de commande du déplacement du véhicule autonome 100.

Lorsqu'une situation à optimiser est détectée, on enchaine sur l'étape E3 d'optimisation de la trajectoire.

L'optimisation de la trajectoire s'effectue par l'intermédiaire d'une modification de la première carte M1 et/ou du premier profil cinématique P1, notamment du profil cinématique P1ᵢ associé au segment Sᵢ sur lequel se situe la situation à optimiser.

Avantageusement, le tableau de situations associe à chaque situation prédéfinie au moins une méthode d'optimisation prédéfinie.

Une méthode d'optimisation prédéfinie peut être :
- une modification de carte, ou
- une modification de profil cinématique, ou
- une modification de carte et de profil cinématique.

Concernant la situation du rond-point vide, le tableau de situations peut lui associer une modification de carte consistant créer une carte locale M2 transformant le rond-point à deux voies en un rond-point à une voie. Optionnellement, le tableau de situations pourrait, sous certaines conditions de trafic, associer à cette situation une modification de carte et de profil cinématique.

Dans le cas de la situation du rond-point encombré, le tableau de situations peut lui associer une modification de profil cinématique et le calcul d'un nouveau segment de trajectoire S'ᵢ, dont la courbe se superpose à celle du segment Sᵢ, et mettant en œuvre un profil cinématique P2ᵢ comportant des seuils maximaux de vitesse et/ou d'accélération et/ou de jerk supérieurs à ceux du profil cinématique P1ᵢ.

Dans un mode de réalisation préférentiel, la détermination d'un deuxième profil cinématique P2ᵢ comprend un calcul d'un seuil maximal de vitesse sans collision VCOL à partir des données issues des moyens de perception 2, et le deuxième profil cinématique P2ᵢ est défini de sorte à comprendre des vitesses inférieures au seuil maximal de vitesse sans collision VCOL.

Le seuil VCOL est la vitesse maximale à laquelle le véhicule autonome peut se déplacer tout en ayant la possibilité de s'arrêter pour ne pas entrer en collision avec les obstacles détectés par le système de perception 2.

Le seuil VCOL est calculé à partir de la grille d'occupation de la scène de conduite définie par le module de traitement de l'horizon électronique 21. La scène de conduite permet de déterminer quels sont les obstacles les plus proches du véhicule autonome 100, en particulier les sujets d'intérêt tels que les autres véhicules ou les piétons.

Dans un mode de réalisation simplifié, le seuil VCOL peut être calculé en résolvant l'équation Math1 suivante : $VCOL = \sqrt{2 \times A \times DLIM}$ où :
- A est une accélération, notamment la valeur de freinage nécessaire pour atteindre la vitesse VCOL,
- DLIM est la distance limite de perception.

Pour déterminer le deuxième profil cinématique P2ᵢ, on peut utiliser la méthode de limitation du jerk précédemment décrite. Dans ce cas, l'augmentation de la réactivité du véhicule autonome 100 sera obtenue en fixant seuil maximal de vitesse du deuxième profil P2ᵢ à une valeur Vmax2 à la fois supérieure au seuil maximal de vitesse Vmax1 du premier profil P1ᵢ et inférieure à la vitesse maximale sans collision VCOL. Avantageusement, les seuils maximaux d'accélération et/ou de jerk Amax2 et Jmax2 du deuxième profil sont respectivement supérieurs aux seuils Amax1 et Jmax1 du premier profil P1ᵢ.

A l'issue de la détermination d'une carte locale M2 et/ou d'un deuxième profil cinématique P2ᵢ, on reboucle sur l'étape E1 de détermination d'une trajectoire pour calculer un deuxième segment de trajectoire S'ᵢ -ou segment optimisé S'ᵢ- se substituant au premier segment de trajectoire Sᵢ.

Le segment optimisé S'ᵢ est déterminé de sorte à être compatible avec la carte locale M2 et/ou le deuxième profil cinématique P2ᵢ.

Le segment optimisé S'ᵢ peut présenter la même courbe que le premier segment Sᵢ, notamment lorsque la carte M1 n'a pas été modifiée. Ils sont toutefois différents par les vitesses et/ou accélérations et/ou jerks qu'ils mettent en œuvre.

Le segment optimisé S'ᵢ relie les point d'entrée et de sortie A, B du segment donné Sᵢ. Le segment optimisé S'ᵢ est avantageusement déterminé de sorte à présenter une continuité G2, c'est-à-dire une continuité de courbure, entre les différents arcs qui le constituent, mais aussi une continuité de courbure au point A avec le segment de trajectoire qui le précède, et une continuité de courbure au point B avec le segment de trajectoire qui le suit.

Dans un mode de réalisation, le segment optimisé S'ᵢ peut être défini par un polynôme du cinquième degré, utilisant notamment des courbes de Bézier.

Puis on enchaine sur l'étape E4. Dans la quatrième étape E4, on commande le déplacement du véhicule autonome selon la trajectoire déterminée dans les étapes précédentes, cette trajectoire pouvant comprendre un segment optimisé S'ᵢ.

La trajectoire est transmise aux lois de commande du véhicule autonome 100, afin d'être transformée en ordres de commandes transmis aux actionneurs de mouvement 4 du véhicule autonome 100.

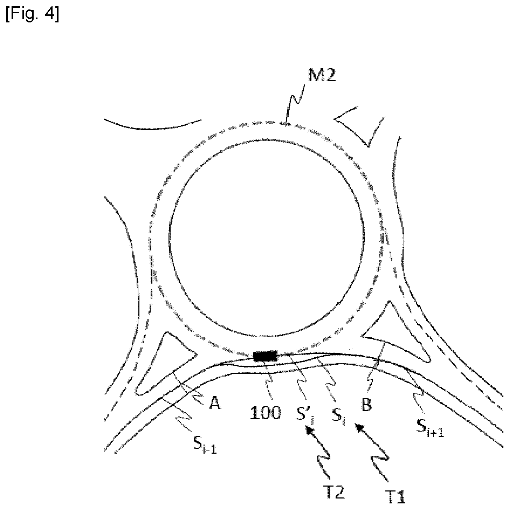

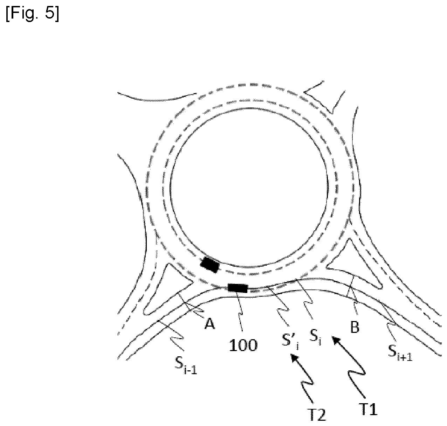

Deux exemples de de mise en œuvre du procédé de commande sont décrits par les figures 4 et 5. En remarque, la position du véhicule autonome 100 sur ces figures représente l'étape E4 de déplacement du véhicule selon la trajectoire optimisée.

La figure 4 illustre un premier exemple de mise en œuvre du procédé. A un instant T, le véhicule autonome 100 circule sur un segment Sᵢ₋₁ d'une trajectoire T1, la trajectoire T1 étant calculée en fonction d'une carte M1 et d'un profil cinématique P1. Le segment suivant Sᵢ se situe entièrement dans la zone de perception, définie par la distance limite de perception DLIM calculée à l'instant T. Le segment suivant Sᵢ met en œuvre un déplacement sur la voie extérieure d'un rond-point. En l'absence de trafic sur le rond-point, dans l'étape E2 on détecte une situation du rond-point vide. Dans l'étape E3, la carte M1 est localement modifiée par une carte locale M2 pour remplacer le rond-point à deux voies par un rond-point à une voie. Puis une nouvelle trajectoire S'i est calculée dans l'étape E1 en utilisant la carte locale M2, la nouvelle trajectoire S'i reliant le point d'entrée A du segment Sᵢ au point de sortie B du segment Sᵢ. Dans l'étape E4, le véhicule autonome 100 est commandé pour se déplacer sur le segment S'i entre les points A et B.

La figure 5 illustre un deuxième exemple de mise en œuvre du procédé. Dans ce deuxième exemple, le segment suivant Sᵢ détermine un déplacement sur la voie extérieure d'un rond-point. Le trafic sur le rond-point est dense, et le véhicule autonome 100 doit s'arrêter en entrée du rond-point. A l'issue d'une durée donnée d'immobilisation du véhicule autonome en entrée du rond-point, dans l'étape E2 on détecte une situation du rond-point encombré. Dans l'étape E3, un nouveau profil cinématique P2ᵢ est défini pour faciliter l'entrée du véhicule sur le rond-point. Le profil cinématique P2ᵢ est ensuite utilisé dans l'étape E1 pour déterminer le nouveau segment S'i reliant les points A et B. Les segments Sᵢ et S'ᵢ suivent la même courbe mais ne mettent pas en œuvre les mêmes vitesses et/ou accélérations et/ou jerks. Dans l'étape E4, le véhicule autonome 100 est commandé pour se déplacer sur le segment S'i entre les points A et B.

Finalement, le procédé de commande selon l'invention utilise les moyens de perception pour détecter un ensemble scénarios de trafic et optimiser la trajectoire du véhicule autonome selon le scénario de trafic identifié.

L'optimisation de trajectoire selon l'invention met en œuvre deux leviers d'optimisation qui peuvent être utilisés indépendamment l'un de l'autre ou simultanément. Un premier levier d'optimisation consiste à modifier localement la carte représentant l'infrastructure du scénario de trafic identifié. Un deuxième levier d'optimisation consiste à augmenter temporairement la réactivité du véhicule autonome, en augmentant les seuils de vitesse et/ou accélération et/ou jerk maximaux appliqués dans sa trajectoire.

Les leviers d'optimisation sont déterminés en fonction du trafic environnant, pour éviter toute collision. Une modification de carte intervient de préférence en l'absence de trafic environnant. Une augmentation de la réactivité du véhicule intervient dans des conditions de trafic dense et prend en compte une vitesse maximale sans collision calculée à partir des données de l'horizon électronique. Ainsi l'optimisation de trajectoire se déroule dans des conditions sécurisées.

Outre la fiabilité sur le plan de la sécurité routière, l'invention présente plusieurs avantages. En premier lieu elle réduit le risque que le véhicule autonome se retrouve dans une situation de blocage du fait d'une forte densité de trafic. En augmentant ponctuellement la réactivité du véhicule autonome, elle lui permet de s'insérer plus facilement dans un trafic dense, tout en revenant à un niveau de confort de conduite optimum à l'issue de la manœuvre d'insertion. L'invention favorise donc la fluidité du trafic et le confort de conduite en adaptant le style de conduite du véhicule autonome au trafic environnant. De façon plus générale, dans un ensemble de situations données, l'invention permet au véhicule autonome de reproduire les choix d'optimisation d'un conducteur humain confronté à ces situations.

Ainsi, l'invention permet au véhicule autonome d'adapter la réactivité de sa conduite en fonction des données de perception relatives aux données statiques (infrastructure) et dynamiques (notamment le trafic) de la scène de conduite. La fluidité de conduite du véhicule autonome est ainsi améliorée, notamment les situations de blocages sont évitées, tout en respectant la sécurité de conduite.

## Revendications

1. Procédé de commande d'un véhicule autonome (100) équipé d'au moins un moyen de perception (21) et d'une première carte (M1) comprenant des données numériques mémorisées représentant l'infrastructure réelle de l'environnement du véhicule autonome (100), le procédé de commande comprenant :
- une étape (E1) de définition d'une première trajectoire (T1) du véhicule autonome (100) et d'un premier profil cinématique associé (P1),
- une étape (E2) de détection, à partir de données transmises par l'au moins un moyen de perception (21), d'une situation à optimiser sur un segment donné (S) de la première trajectoire (T1), le segment donné (S) se situant à l'avant du véhicule autonome (100), sur une distance inférieure à une distance de détection maximale (DLIM) de l'au moins un moyen de perception (21),
le procédé de commande étant **caractérisé en ce qu'**il comprend :
- une étape (E3) d'optimisation de la première carte (M1), l'optimisation de la première carte comprenant une détermination d'une carte locale (M2) sur le segment donné (S), la carte locale (M2) représentant une modification virtuelle de l'infrastructure réelle,
- une étape (E4) de commande du déplacement du véhicule autonome (100) sur le segment donné (S) en prenant en compte la carte locale (M2).

2. Procédé de commande selon la revendication précédente, **caractérisé en ce que** la détermination d'une carte locale (M2) permet la détermination, notamment par des courbes de Bézier, d'une nouvelle courbe du segment donné (S) entre un point d'entrée (A) et un point de sortie (B) du segment donné (S) et **en ce que** la nouvelle courbe présente une continuité G2 avec la première trajectoire (T1) au point d'entrée (A) et au point de sortie (B).

3. Procédé de commande selon l'une des revendications précédentes, dans lequel l'étape (E3) d'optimisation de la première carte (M1) comprend en outre l'optimisation du premier profil cinématique (P1), l'optimisation du premier profil cinématique (P1) comprenant une détermination d'un deuxième profil cinématique (P2) associé au segment donné (S), au moins un paramètre du deuxième profil cinématique (P2) étant différent d'un paramètre du premier profil cinématique (P1),
l'étape (E4) de commande du déplacement du véhicule autonome (100) sur le segment donné (S) prenant en outre en compte le deuxième profil cinématique (P2).

4. Procédé de commande selon la revendication précédente, **caractérisé en ce que** la détermination d'un deuxième profil cinématique (P2) associé au segment donné (S) comprend un calcul d'un seuil maximal de vitesse sans collision (VCOL) à partir des données issues de l'au moins un moyen de perception (21) et **en ce que** le deuxième profil cinématique (P2) comprend des vitesses maximales inférieures au seuil maximal de vitesse sans collision (VCOL).

5. Procédé de commande selon la revendication précédente, **caractérisé en ce que** le seuil maximal de vitesse sans collision (VCOL) est calculé en résolvant une équation selon laquelle le seuil maximal de vitesse sans collision (VCOL) est égal à la racine carrée du produit de la valeur de freinage nécessaire pour atteindre le seuil maximal de vitesse sans collision (VCOL) par le double la distance de détection maximale (DLIM) de l'au moins un moyen de perception (21).

6. Procédé de commande selon l'une des revendications précédentes **caractérisé en ce que** l'étape (E2) de détection d'une situation à optimiser comprend une mesure d'une durée de maintien, pendant laquelle le véhicule autonome (100) reste dans une situation à optimiser et une comparaison de la durée de maintien à un seuil de déclenchement associé à ladite situation, et **en ce que** l'étape (E3) d'optimisation s'exécute lorsque la durée de maintien est supérieure au seuil de déclenchement.

7. Procédé de commande selon l'une des revendications précédentes **caractérisé en ce qu'**un ensemble de situations prédéfinies est mémorisé dans une mémoire électronique (6), et **en ce que** l'étape (E2) de détection d'une situation à optimiser comprend une comparaison d'une perception issue de l'au moins un moyen de perception (21) avec l'ensemble de situations prédéfinies.

8. Procédé de commande selon la revendication précédente, **caractérisé en ce que** l'ensemble de situations prédéfinies comprend une traversée d'un rond-point dont les deux voies sont vides, et/ou une entrée sur un rond-point dans des conditions de trafic dense, et/ou une réunion de deux voies de circulation en une seule voie, et/ou un passage d'un carrefour embouteillé, et/ou un dépassement d'un véhicule très lent sur une route à double sens comprenant une seule voie dans chaque sens.

9. Procédé de commande selon l'une des revendications 3 à 5, **caractérisé en ce que** le deuxième profil cinématique (P2) comprend une vitesse maximale plus élevée d'au moins 20%, et/ou une accélération maximale plus élevée d'au moins 200%, et/ou un jerk plus élevé d'au moins 1000% que le premier profil cinématique (P1).

10. Dispositif (10) de commande d'un véhicule autonome (100), le véhicule autonome étant équipé d'actionneurs de mouvement (4), d'au moins un moyen de perception (21) et d'une première carte (M1) comprenant des données numériques mémorisées représentant l'infrastructure réelle de l'environnement du véhicule autonome (100), le dispositif comprenant des moyens configurés pour mettre en œuvre le procédé selon l'une des revendications précédentes.

11. Véhicule autonome (100), caractérisé en qu'il comprend un dispositif de commande (10) selon la revendication précédente.

12. Produit programme d'ordinateur comprenant des instructions de code de programme enregistrées sur un support lisible par ordinateur pour mettre en œuvre les étapes du procédé selon l'une quelconque des revendications 1 à 9 lorsque ledit programme est exécuté par un ordinateur.

13. Support d'enregistrement de données, lisible par un ordinateur, sur lequel est enregistré un programme d'ordinateur selon la revendication précédente.

## Patentansprüche

1. Verfahren zur Steuerung eines autonomen Fahrzeugs (100), das mit mindestens einem Wahrnehmungsmittel (21) und einer ersten Karte (M1), die gespeicherte digitale Daten beinhaltet, die die reale Infrastruktur der Umgebung des autonomen Fahrzeugs (100) darstellen, ausgestattet ist, wobei das Steuerungsverfahren Folgendes beinhaltet:
- einen Schritt (E1) des Definierens einer ersten Trajektorie (T1) des autonomen Fahrzeugs (100) und eines ersten assoziierten kinematischen Profils (P1),
- einen Schritt (E2) des Detektierens, anhand von Daten, die durch das mindestens eine Wahrnehmungsmittel (21) übertragen werden, einer zu optimierenden Situation auf einem gegebenen Segment (S) der ersten Trajektorie (T1), wobei sich das gegebene Segment (S) in einer Entfernung, die kleiner als eine maximale Detektionsentfernung (DLIM) des mindestens einen Wahrnehmungsmittels (21) ist, vor dem autonomen Fahrzeug (100) befindet, wobei das Steuerungsverfahren **dadurch gekennzeichnet ist, dass** es Folgendes beinhaltet:
- einen Schritt (E3) des Optimierens der ersten Karte (M1), wobei das Optimieren der ersten Karte das Bestimmen einer lokalen Karte (M2) für das gegebene Segment (S) beinhaltet, wobei die lokale Karte (M2) eine virtuelle Modifizierung der realen Infrastruktur darstellt,
- einen Schritt (E4) des Steuerns der Fortbewegung des autonomen Fahrzeugs (100) auf dem gegebenen Segment (S) unter Berücksichtigung der lokalen Karte (M2).

2. Steuerungsverfahren nach dem vorhergehenden Anspruch, **dadurch gekennzeichnet, dass** das Bestimmen einer lokalen Karte (M2) das Bestimmen, insbesondere durch Bézierkurven, einer neuen Kurve des gegebenen Segments (S) zwischen einem Anfangspunkt (A) und einem Endpunkt (B) des gegebenen Segments (S) gestattet und dass die neue Kurve an dem Anfangspunkt (A) und dem Endpunkt (B) eine Kontinuität G2 mit der ersten Trajektorie (T1) aufweist.

3. Steuerungsverfahren nach einem der vorhergehenden Ansprüche, wobei der Schritt (E3) des Optimierens der ersten Karte (M1) ferner das Optimieren des ersten kinematischen Profils (P1) beinhaltet, wobei das Optimieren des ersten kinematischen Profils (P1) das Bestimmen eines zweiten kinematischen Profils (P2) beinhaltet, das mit dem gegebenen Segment (S) assoziiert ist, wobei sich mindestens ein Parameter des zweiten kinematischen Profils (P2) von einem Parameter des ersten kinematischen Profils (P1) unterscheidet,
wobei der Schritt (E4) des Steuerns der Fortbewegung des autonomen Fahrzeugs (100) auf dem gegebenen Segment (S) ferner das zweite kinematische Profil (P2) berücksichtigt.

4. Steuerungsverfahren nach dem vorhergehenden Anspruch, **dadurch gekennzeichnet, dass** das Bestimmen eines zweiten kinematischen Profils (P2), das mit dem gegebenen Segment (S) assoziiert ist, das Berechnen eines maximalen Geschwindigkeitsschwellenwerts ohne Kollision (VCOL) anhand der von dem mindestens einen Wahrnehmungsmittel (21) ausgegebenen Daten beinhaltet und dass das zweite kinematische Profil (P2) maximale Geschwindigkeiten beinhaltet, die kleiner als der maximale Geschwindigkeitsschwellenwert ohne Kollision (VCOL) sind.

5. Steuerungsverfahren nach dem vorhergehenden Anspruch, **dadurch gekennzeichnet, dass** der maximale Geschwindigkeitsschwellenwert ohne Kollision (VCOL) durch das Lösen einer Gleichung berechnet wird, gemäß der der maximale Geschwindigkeitsschwellenwert ohne Kollision (VCOL) gleich der Quadratwurzel des Produkts aus dem Bremswert, der zum Erreichen des maximalen Geschwindigkeitsschwellenwerts ohne Kollision (VCOL) erforderlich ist, und dem Zweifachen der maximalen Detektionsentfernung (DLIM) des mindestens einen Wahrnehmungsmittels (21) ist.

6. Steuerungsverfahren nach einem der vorhergehenden Ansprüche, **dadurch gekennzeichnet, dass** der Schritt (E2) des Detektierens einer zu optimierenden Situation das Messen einer Verweilzeit, während der das autonome Fahrzeug (100) in einer zu optimierenden Situation verbleibt, und das Vergleichen der Verweilzeit mit einem mit der Situation assoziierten Auslöseschwellenwert beinhaltet und dass der Schritt (E3) des Optimierens ausgeführt wird, wenn die Verweilzeit größer als der Auslöseschwellenwert ist.

7. Steuerungsverfahren nach einem der vorhergehenden Ansprüche, **dadurch gekennzeichnet, dass** ein Satz vordefinierter Situationen in einem elektronischen Speicher (6) gespeichert ist und dass der Schritt (E2) des Detektierens einer zu optimierenden Situation das Vergleichen einer von dem mindestens einen Wahrnehmungsmittel (21) ausgegebenen Wahrnehmung mit dem Satz vordefinierter Situationen beinhaltet.

8. Steuerungsverfahren nach dem vorhergehenden Anspruch, **dadurch gekennzeichnet, dass** der Satz vordefinierter Situationen das Durchqueren eines Kreisverkehrs, dessen zwei Spuren leer sind, und/oder das Einfahren in einen Kreisverkehr bei dichtem Verkehr und/oder das Zusammenlaufen zweier Fahrspuren zu einer einzigen Spur und/oder das Passieren einer verkehrsreichen Kreuzung und/oder das Überholen eines sehr langsamen Fahrzeugs auf einer zweispurigen Straße mit einer einzigen Spur in jeder Richtung beinhaltet.

9. Steuerungsverfahren nach einem der Ansprüche 3 bis 5, **dadurch gekennzeichnet, dass** das zweite kinematische Profil (P2) eine um mindestens 20 % höhere maximale Geschwindigkeit und/oder eine um mindestens 200 % höhere maximale Beschleunigung und/oder einen um mindestens 1000 % höheren Ruck als das erste kinematische Profil (P1) beinhaltet.

10. Vorrichtung (10) zur Steuerung eines autonomen Fahrzeugs (100), wobei das autonome Fahrzeug mit Bewegungsaktoren (4), mindestens einem Wahrnehmungsmittel (21) und einer ersten Karte (M1), die gespeicherte digitale Daten beinhaltet, die die reale Infrastruktur der Umgebung des autonomen Fahrzeugs (100) darstellen, ausgestattet ist, wobei die Vorrichtung Mittel beinhaltet, die dazu konfiguriert sind, das Verfahren nach einem der vorhergehenden Ansprüche durchzuführen.

11. Autonomes Fahrzeug (100), **dadurch gekennzeichnet, dass** es eine Steuerungsvorrichtung (10) nach dem vorhergehenden Anspruch beinhaltet.

12. Computerprogrammprodukt, das Programmcodeanweisungen beinhaltet, die auf einem computerlesbaren Medium gespeichert sind, um die Schritte des Verfahrens nach einem der Ansprüche 1 bis 9 durchzuführen, wenn das Programm von einem Computer ausgeführt wird.

13. Computerlesbares Datenspeichermedium, auf dem ein Computerprogramm nach dem vorhergehenden Anspruch gespeichert ist.

## Claims

1. Method for controlling an autonomous vehicle (100) equipped with at least one perception means (21) and with a first map (M1) comprising stored digital data representing the actual infrastructure of the environment of the autonomous vehicle (100), the control method comprising:
- a step (E1) of defining a first trajectory (T1) of the autonomous vehicle (100) and a first associated kinematic profile (P1);
- a step (E2) of detecting, on the basis of data transmitted by the at least one perception means (21), a situation to be optimized on a given segment (S) of the first trajectory (T1), the given segment (S) being located in front of the autonomous vehicle (100), over a distance which is less than a maximum detection distance (DLIM) of the at least one perception means (21), the control method being **characterized in that** it comprises:
- a step (E3) of optimizing the first map (M1), optimizing the first map comprising determining a local map (M2) on the given segment (S), the local map (M2) representing a virtual modification of the actual infrastructure,
- a step (E4) of controlling the movement of the autonomous vehicle (100) on the given segment (S), taking into account the local map (M2).

2. Control method according to the preceding claim, **characterized in that** determining a local map (M2) makes it possible to determine, notably by means of Bezier curves, a new curve of the given segment (S) between an entry point (A) and an exit point (B) of the given segment (S), and **in that** the new curve has a continuity G2 with the first trajectory (T1) at the entry point (A) and at the exit point (B).

3. Control method according to one of the preceding claims, wherein the step (E3) of optimizing the first map (M1) further comprises optimizing the first kinematic profile (P1), optimizing the first kinematic profile (P1) comprising determining a second kinematic profile (P2) associated with the given segment (S), at least one parameter of the second kinematic profile (P2) being different from a parameter of the first kinematic profile (P1),
the step (E4) of controlling the movement of the autonomous vehicle (100) on the given segment (S) furthermore taking into account the second kinematic profile (P2).

4. Control method according to the preceding claim, **characterized in that** determining a second kinematic profile (P2) associated with the given segment (S) comprises computing a maximum collision-free speed threshold (VCOL) on the basis of the data originating from the at least one perception means (21), and **in that** the second kinematic profile (P2) comprises maximum speeds below the maximum collision-free speed threshold (VCOL).

5. Control method according to the preceding claim, **characterized in that** the maximum collision-free speed threshold (VCOL) is computed by solving an equation according to which the maximum collision-free speed threshold (VCOL) is equal to the square root of the product of the braking value required to reach the maximum collision-free speed threshold (VCOL) and twice the maximum detection distance (DLIM) of the at least one perception means (21).

6. Control method according to one of the preceding claims, **characterized in that** the step (E2) of detecting a situation to be optimized comprises measuring a holding time, during which the autonomous vehicle (100) remains in a situation to be optimized, and comparing the holding time with a triggering threshold associated with said situation, and **in that** the optimization step (E3) is executed when the holding time is above the triggering threshold.

7. Control method according to one of the preceding claims, **characterized in that** a set of predefined situations is stored in an electronic memory (6), and **in that** the step (E2) of detecting a situation to be optimized comprises comparing a perception originating from the at least one perception means (21) with the set of predefined situations.

8. Control method according to the preceding claim, **characterized in that** the set of predefined situations comprises negotiating a roundabout the two lanes of which are empty, and/or entering a roundabout in dense traffic conditions, and/or two traffic lanes merging into a single lane, and/or crossing a gridlocked junction, and/or overtaking a very slow vehicle on a two-way road comprising a single lane in each direction.

9. Control method according to one of Claims 3 to 5, **characterized in that** the second kinematic profile (P2) comprises a maximum speed which is at least 20% higher, and/or a maximum acceleration which is at least 200% higher, and/or a jerk which is at least 1000% higher than the first kinematic profile (P1).

10. Device (10) for controlling an autonomous vehicle (100), the autonomous vehicle being equipped with motion actuators (4), with at least one perception means (21) and with a first map (M1) comprising stored digital data representing the actual infrastructure of the environment of the autonomous vehicle (100), the device comprising means configured to implement the method according to one of the preceding claims.

11. Autonomous vehicle (100), **characterized in that** it comprises a control device (10) according to the preceding claim.

12. Computer program product comprising program code instructions which are stored on a computer-readable medium for implementing the steps of the method according to any one of Claims 1 to 9 when said program is executed by a computer.

13. Computer-readable data storage medium on which a computer program according to the preceding claim is stored.
